# EUROPEAN PATENT APPLICATION

(11) **EP 4 583 407 A1**
(43) Date of publication of application: **09.07.2025**
(21) Application number: 22956955.3
(22) Date of filing: 01.09.2022
(51) Int. Cl.: H03L 7/099, G01K 7/22

(54) **MEASUREMENT CIRCUIT AND OPERATION METHOD THEREFOR**

(71) Applicant: Techtronic Cordless GP, Anderson, SC 29621 (US)
(72) Inventor: CHEN, Zi Cong, Dongguan, Guangdong 523945 (CN); WANG, Fang, Dongguan, Guangdong 523945 (CN); XIE, Li Hua, Dongguan, Guangdong 523945 (CN); WEN, Chao, Dongguan, Guangdong 523945 (CN); LI, Yong Min, Dongguan, Guangdong 523945 (CN); ZHANG, Bao An, Dongguan, Guangdong 523945 (CN)
(74) Representative: Meissner Bolte Partnerschaft mbB
(86) International application number: PCT/CN2022/116494
(87) International publication number: WO 2024/045130

(57) **Abstract**

The present invention provides a detection circuit and an operation method thereof. The detection circuit comprises: a voltage source (V1); a ground (G1); a first resistor (R1) whose first end is connected to the voltage source (V1); a thermistor (RT1) whose first end is connected to a second end of the first resistor (R1); a second resistor (R2) whose first end is connected to a connection point between the thermistor (RT1) and the first resistor (R1); a first switching element (Q1) connected between a second end of the second resistor (R2) and the ground (G1); and a second switching element (Q2) connected between a second end of the thermistor (RT1) and the ground (G1).

## Description

### FIELD

The present invention generally relates to a detection circuit and an operation method thereof, and specifically to a detection circuit for a power tool (e.g., a motor of the power tool) and an operation method thereof.

### BACKGROUND

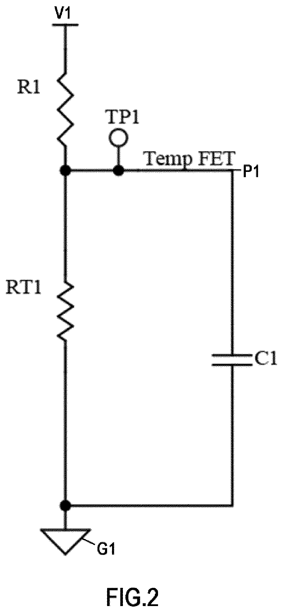

Typically, a power tool comprises a motor and a circuit for controlling the motor. The circuit comprises a power supply and a ground, and comprises various power devices. The temperature of these power devices needs to be monitored to ensure the normal operation of the circuit. FIG. 2 shows a voltage source V1 and a ground G1, and resistors R1 and RT1 that are arranged in series in sequence between the voltage source V1 and the ground G1. The resistor RT1 is a thermistor and may be used as a temperature sensor. RT1 may be used to detect the temperature of the power devices. When the detected temperature of the power devices exceeds a temperature threshold, the control unit needs to adjust the operation of the circuit and the motor. In addition, the circuit further comprises a circuit pin P1 located between R1 and RT1. The pin may be detected to obtain a voltage value here, and then whether the circuit is in a floating state is determined. The circuit further comprises a test point TP1, which serves as a test point for the circuit.

Since the resistance value of RT1 changes with the temperature, a divided voltage of the power supply voltage detected at the test point TP1 is not a constant value, and the voltage of the voltage source V1 cannot be calibrated on the basis of the divided voltage; secondly, since the divided voltage is not constant, the floating state of the pin P1 cannot be determined, and the floating state of the resistor RT1 cannot be determined either; in addition, the control unit determines the resistance value of RT1 and thereby determines the temperature through the divided voltage at point TP1, but the value of the divided voltage monitored by the control unit is usually in a limited range, that is, the control unit can only monitor a small temperature range. When the temperature exceeds the temperature range, the value of the divided voltage at point TP1 will exceed the monitoring range of the control unit, so that the temperature of the power devices cannot be monitored accurately.

### SUMMARY

The present invention provides a detection circuit and an operation method thereof, which address one or more of the above problems.

The present invention discloses a detection circuit, comprising: a voltage source (V1); a ground (G1); a first resistor (R1) whose first end is connected to the voltage source (V1); a thermistor (RT1) whose first end is connected to a second end of the first resistor (R1); a second resistor (R2) whose first end is connected to a connection point between the thermistor (RT1) and the first resistor (R1); a first switching element (Q1) connected between a second end of the second resistor (R2) and the ground (G1); and a second switching element (Q2) connected between a second end of the thermistor (RT1) and the ground (G1).

According to an embodiment of the present invention, the first switching element (Q1) and the second switching element (Q2) are transistors.

According to an embodiment of the present invention, the thermistor (RT1) is a negative temperature coefficient thermistor.

According to an embodiment of the present invention, the detection circuit further comprises a pin (P1) located between the first resistor (R1) and the thermistor (RT1).

According to an embodiment of the present invention, the detection circuit further comprises a first capacitor (C1) connected in parallel with the thermistor (RT1) between the first resistor (R1) and the ground (G1).

According to an embodiment of the present invention, the detection circuit further comprises a driving circuit for controlling the first switching element (Q1), the driving circuit comprising: a third resistor (R3) and a second capacitor (C2), the third resistor (R3) and the second capacitor (C2) being sequentially connected between a control end of the first switching element (Q1) and the ground (G1); and a fourth resistor (R4) being connected in parallel with the third resistor (R3) and the second capacitor (C2) between the control end of the first switching element (Q1) and the ground (G1).

According to an embodiment of the present invention, the detection circuit further comprises a driving circuit for controlling the second switching element (Q2), the driving circuit comprising: a fifth resistor (R5) connected between a control end of the second switching element (Q2) and a controller of the detection circuit; and a sixth resistor (R6) connected between the control end the second switching element (Q2) and the ground (G1).

The present invention discloses a method of operating the detection circuit as described above, the method comprising a step of turning off the first switching element (Q1) and the second switching element (Q2) to detect a voltage value at the connection point between the thermistor (RT1) and the first resistor (R1).

According to an embodiment of the invention, the method further comprises a step of turning on the first switching element (Q1) and turning off the second switching element (Q2) to detect the voltage value at the connection point between the thermistor (RT1) and the first resistor (R1).

According to an embodiment of the invention, the method further comprises a step of turning on the first switching element (Q1) and the second switching element (Q2) to detect the voltage value at the connection point between the thermistor (RT1) and the first resistor (R1).

According to an embodiment of the invention, the method further comprises a step of turning off the first switching element (Q1) and turning on the second switching element (Q2) to detect the voltage value at the connection point between the thermistor (RT1) and the first resistor (R1).

According to an embodiment of the present invention, the method further comprises in the step of turning off the first switching element (Q1) and turning on the second switching element (Q2), a step of turning on the first switching element (Q1) to detect the voltage value at the connection point between the thermistor (RT1) and the first resistor (R1) when the voltage value at the connection point between the thermistor (RT1) and the first resistor (R1) exceeds a predetermined value.

According to an embodiment of the invention, the method further comprises selectively performing one or more of the steps according to control logic.

The present invention discloses a control system for performing the method as described above, wherein the control system selectively performs one or more of the steps according to control logic.

According to the detection circuit and the operation method thereof according to the present invention, the calibration of the voltage of the voltage source may be realized, the floating check of the circuit pin may be realized, and the floating check and/or short-circuiting check of the temperature sensitive resistor in the circuit may also be realized, and additionally, the temperature monitoring range of the temperature sensitive resistor may be expanded. The detection circuit of the present invention is simple in structure, easy to operate, low in cost, may realize multiple functions, has good versatility, and may be applied to various tools and/or motors, such as power tools and their motors.

### BRIEF DESCRIPTION OF THE DRAWINGS

FIG. 1 is a perspective view of an exemplary power tool and components thereof described herein.
FIG. 2 is a diagram of a circuit in the prior art.
FIG. 3 is a diagram of a first embodiment of a circuit according to the present invention.
FIG. 4 is a diagram of a second embodiment of a circuit according to the present invention.
FIG. 5 is a flow chart of operations of the circuit of FIG. 4.

### DETAILED DESCRIPTION

Preferred embodiments of the present invention are further described in detail below with reference to the figures. The following depictions are exemplary and not intended to limit the present invention, and any other similar situations also fall within the protection scope of the present invention.

The present invention relates to a power tool 100. The concept of the present invention is described herein by taking a circular saw as an example, but the present invention is not limited thereto. The power tool may also be other types of power tools known or common in the art, for example, other types of saws such as jig saws, track saws, jigsaws, drills, hammers, impact drills, planes, drivers, milling cutters, sharpeners, angle grinders, vibratory grinders, garden tools and/or multi-functional tools, etc. The inventive concept in the text herein is also applicable to these power tools accordingly. In addition, these power tools may have various structures and compositions, which will not be repeated, and the present invention will focus on the aspects involved in the inventive concept below.

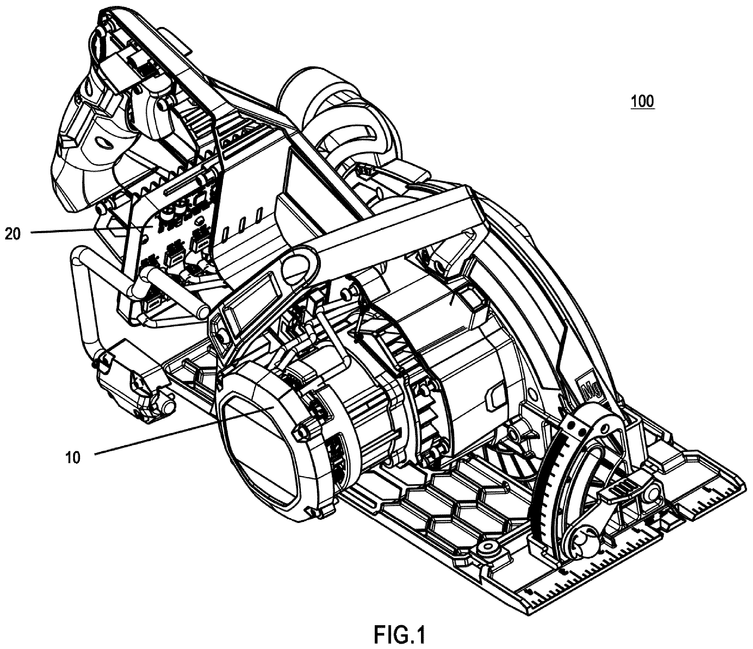

FIG. 1 is a perspective view of a power tool according to the present invention. The power tool 100 comprises a motor 10 and a control circuit board (PCB) 20 that may be used to control the motor 10. FIG. 1 shows that the PCB 20 is located in front left of the motor 10, which is only an example. The PCB 20 may be located at any suitable position relative to the motor 10 and electrically coupled to the motor to control it. The motor 10 may be any type of motor, such as a brushless motor, a brushed motor, a DC motor or an AC motor.

FIG. 2 shows a relevant circuit part in the PCB 20. As stated before, the figure shows that the part comprises a voltage source V1 for powering the circuit and a ground G1, resistors R1 and RT1 that are arranged in series in sequence between the voltage source V1 and the ground G1. The resistor RT1 is also connected in parallel with a capacitor C1 to form an RC loop. The resistor RT1 is a thermistor or a temperature sensitive resistor, such as an NTC (negative temperature coefficient) thermistor, and a resistance value of the NTC thermistor decreases as the temperature rises, so RT1 may be used as a temperature sensor. The RT1 is located near a power device (such as a MOS transistor) in the circuit and used to detect its temperature. When the RT1 detects that the temperature of the power device is too high (for example exceeding a temperature threshold), a microcontroller unit (MCU) adjusts the circuit and the operation of the motor, for example, reduces its power, or even interrupts its operation.

In addition, the circuit further comprises a circuit pin P1. Since the pin P1 is located between R1 and RT1, the voltage measured on the pin is a value of a divided voltage of a voltage source V1 divided by the RT1, and the value of the divided voltage is used to determine whether the circuit is a floating state. The term "float/floating" is understood in a broad sense in the electrical and electronic field, for example, pseudo soldering or disconnection of the pin P1 causes the floating of the circuit; disconnection, open circuit, damage, operation under abnormal conditions or abnormal operation of RT1 all cause the RT1 to float, for example, when the resistance value of RT1 becomes extremely large with the change of temperature and the circuit is close to the open circuit, it may be believed that RT1 is in the floating state.

The circuit further comprises a detection point TP1, which serves as a test point for the circuit. Since the point TP1 is located between R1 and RT1, the voltage measured at the point TP1 is actually the value of a divided voltage of the voltage source V1 divided by the RT1. The Microcontroller Unit (MCU) may calibrate the voltage of the voltage source V1, determine the floating state of the pin P1 and the floating state of the RT1 according to the value of the divided voltage detected at the point TP1. In addition, the Microcontroller Unit (MCU) has an analog-to-digital converter (ADC), which determines the resistance value of RT1 and thus determines the temperature according to the value of the divided voltage detected at point TP1. What is detected by the RT1 is the temperature of the power device itself or the surrounding ambient temperature. The temperature may be referred to as ambient temperature or simply referred to as temperature in the text herein. In the figure, the reference sign Temp_FET is used to represent the value of the divided voltage measured at the test point TP1.

As stated above, the resistance value of RT1 varies with temperature, and the value of the divided voltage of the power supply voltage detected at the test point TP1 is not a constant value, so the microcontroller unit cannot perform the above-mentioned function.

The voltage source V1 may supply any voltage to the circuit depending on applications, for example, a voltage in a range 1 V (Volt) to 5V, a voltage in a range of 2 V to 6 V, or 3V, 4V, 3.3V, 4.5V, 5V, 5.3V, etc.; Similarly, resistors R1 and RT1 may have any suitable resistance value, for example, the resistance of R1 may be in a range of 10KΩ (Ohms) to 30KΩ, such as 15KΩ, 20KΩ, 21KΩ, 25KΩ, etc. The resistance of RT1 may be in a range of 20KΩ (Ohms) to 40KQ range, such as 25 KΩ, 30KΩ, 31 KΩ, 33 KΩ, 35 KΩ, etc.; a capacitor C1 may have any suitable capacitance value for example in a range of 0.001 µF to 0.05 µF range, such as 0.005 µF, 0.01 µF, etc.. It should be noted that the above-mentioned voltage values, resistance values and capacitance values are only examples and not intended to limit, and those skilled in the art may select various suitable values according to specific applications.

The circuit in FIG. 2 is described below by taking 3.3V as V1, 20KΩ as R1, 33KΩ as RT1, and 0.01µF as C1 as an example. RT1 is an NTC thermistor connected in series with R1 between voltage source V1 and the ground G1, so the voltage Temp_FET measured at the point TP1 represents the value of the divided voltage of RT1. The resistance value 33KΩ of RT1 refers to a resistance value at a specified temperature which means a normal temperature or a temperature such as 20°C or 25°C in a normal operating state or initial operating state or before the operation starts. Furthermore, its resistance value falls as the temperature rises, and increases as the temperature falls. At the specified temperature, the value of the divided voltage Temp_FET of RT1 measured at TP1 is 2.05V; as the temperature increases, the resistance value of RT1 decreases, and the value of the divided voltage Temp_FET also decreases accordingly; as the temperature decreases, the resistance value of RT1 increases, and the value of the divided voltage Temp_FET also increases accordingly. The ADC detects the value of the divided voltage Temp_FET at TP1, and uses the value of the divided voltage and the fixed resistance value of R1 to calculate the resistance value of RT1, and then uses a correspondence relationship between the resistance value of RT1 and the temperature to obtain the temperature detected by RT1. However, a voltage detection range of the ADC itself is a limited detection range with an upper limit value and a lower limit value, so the detected temperature value is also a temperature range. When the voltage value at TP1 exceeds this range, for example, when it exceeds a monitoring range of the ADC itself, the ADC cannot accurately determine the voltage value of TP1 and the corresponding temperature.

In this example, the upper limit of the voltage range of the MCU is 2.4V. Considering the change of the resistance value of RT1 itself with temperature, when the temperature drops to 15°C, the resistance value of RT1 increases to a certain value, and the value of the divided voltage of RT1 at this time increases from 2.05V at the specified temperature to 2.4V, and 2.4V is the upper limit of the detection range of the ADC of the MCU. When the temperature further reduces from 15°C, the resistance value of RT1 further increases and its value of divided voltage Temp_FET further increases from 2.4V and exceeds the upper limit of the monitoring range of the MCU beyond its detection range. Therefore, a minimum temperature monitored by the MCU is 15°C. Similarly, the MCU has a certain lower voltage limit, and accordingly, a maximum temperature monitored is 125°C, so the MCU can only monitor the temperature range from 15°C to 125°C.

It should be noted that the voltage detection range and temperature monitoring range of the MCU are only examples for an illustration purpose, not for a limiting purpose, and RT1 is not necessarily an NTC (negative temperature coefficient) thermistor, and it may also be a PTC (positive temperature coefficient) thermistor.

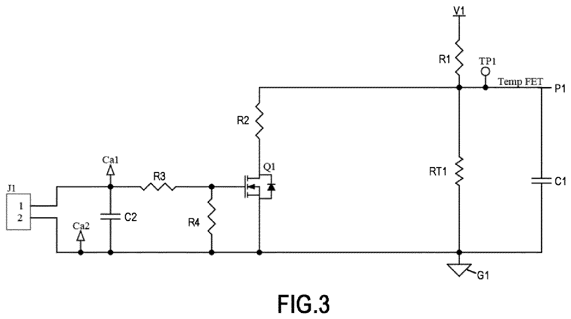

In view of the above drawbacks and problems, the present invention proposes an improved circuit, that is, a first embodiment of the circuit shown in FIG. 3. Compared with the circuit of FIG. 2, a resistor R2 with a fixed resistance value and a transistor Q1 are added in FIG. 3, and the resistor R2 and the transistor Q1 are electrically connected in parallel with the RT1. The transistor Q1 corresponds to a switching element, and may be turned on and off. The transistor Q1 may be a diode, a triode, a field effect transistor, a thyristor, or any combination thereof, etc., and may be used to realize the ON/OFF control of the circuit. When the transistor Q1 is turned on, the resistance of the transistor Q1 is very small and negligible, so that the resistor R2 is directly electrically connected between the voltage source V1 and the ground G1, whereupon the resistor R2 is connected in parallel with RT1; when the transistor Q1 is turned off, its resistance value is very large, thus placing the resistor R1 in an open circuit state. A driving circuit for controlling the transistor Q1 is disposed on a left side of the transistor Q1, the driving circuit is connected to an input end or a control end of the transistor Q1, and the input end or the control end is used to control the ON/OFF of the transistor and may be, for example, a base. The driving circuit comprises resistors R3, R4, and a capacitor C2 electrically connected between the ground G1 and the input end of the transistor, wherein R4 is connected between the input end of the transistor and the ground G1, and R3 and C2 are connected in series between the input end of the transistor and the ground G1, both R3 and C2 are connected in parallel with R4. The MCU controls the ON/OFF of the transistor Q1 by controlling the driving circuit.

As stated above, similar to resistors R1 and RT1, the resistance values of resistors R2, R3, R4 may be any suitable resistance values. Taking 20KΩ as the resistance value of R2 as an example, when the transistor Q1 is turned on, the resistor R2 and RT1 are connected in parallel between the resistor R1 and the ground, and then the resistor R2 and RT1 are connected in series with R1 between the voltage source V1 and the ground G1. At this time, the voltage measured at TP1 is the value of the divided voltage of a total resistance resulting from R2 and RT1 connected in parallel. At the same temperature, as compared with the value of the divided value of the RT1 alone, the total resistance value after R2 is connected in parallel with RT1 reduces, so the value of the divided voltage reduces. As such, even though the temperature falls below 15°C, although the resistance value of RT1 increases, due to the existence of parallel R2, the value of the divided voltage measured at TP1 may still be within the voltage detection range of the MCU. As such, the MCU may monitor the temperature below 15 °C, i.e. expand the temperature monitoring range. The expanded temperature monitoring range is specifically determined by the resistance value of the resistor R2. The lower the resistance value of R2, the smaller the total resistance value after it is connected in parallel with RT1, and the smaller the value of divided voltage measured at TP1, so that a larger temperature range may be detected.

In this example, the resistance value of R2 is 20KΩ, so that the temperature monitoring range of the MCU is expanded to -40°C to 125°C. Specifically, as compared with the circuit in FIG. 2, when the temperature drops below 15°C, the MCU will turn on transistor Q1 and connect R2 in parallel with RT1, so that the value of divided voltage Temp_FET which originally exceeds an extreme value 2.4V when the temperature is below 15°C in FIG. 2 reduces below the extreme limit 2.4V in FIG. 3. As such, even though the temperature continues to decrease by a certain amount from 15°C, the value of divided voltage Temp_FET is still within the detection range of the MCU.

However, as stated above with reference to FIG. 2, since the resistance value of RT1 varies with temperature, the embodiment of FIG. 3 still cannot perform the following functions: calibrating the voltage of the voltage source V1; determining the floating state of the pin P1; determining the floating state of the resistor RT1.

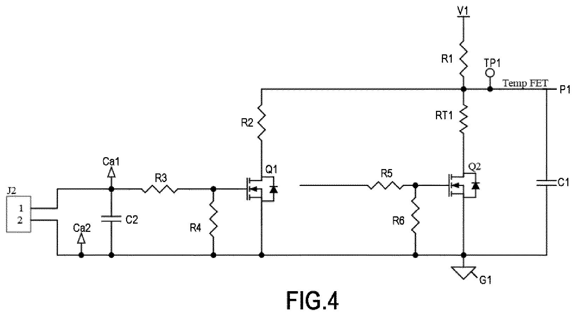

FIG. 4 shows a second embodiment of the circuit. As compared with the circuit of FIG. 3, a transistor Q2 is added to FIG. 4. The transistor Q2 is connected in series between the resistor RT1 and the ground G1. The transistor Q2 is substantially the same as the transistor Q1 which has been described above, and will not be repeated any more here. Similar to transistor Q1, transistor Q2 also has a driving circuit connected to the input end or control end of the transistor Q2, and comprises R5 and a resistor R6 electrically coupled between ground G1 and the input end of the transistor, wherein R5 is connected between the input end of the transistor and a driving network (not shown) of the MCU. As mentioned above, similar to resistors R1 and RT1, resistors R5, R6 may have any suitable resistance values. For example, R5 may have a resistance value 1KΩ and R6 may have a resistance value 200KΩ. Similarly, the MCU controls the ON/OFF of the transistor Q2 by controlling the driving circuit.

With the transistor Q2 being added, RT1 may be disconnected, so that the influence of the changes of the resistance value of RT1 may be removed at some time, thereby realizing the function that cannot be realized in FIG. 2 and FIG. 3.

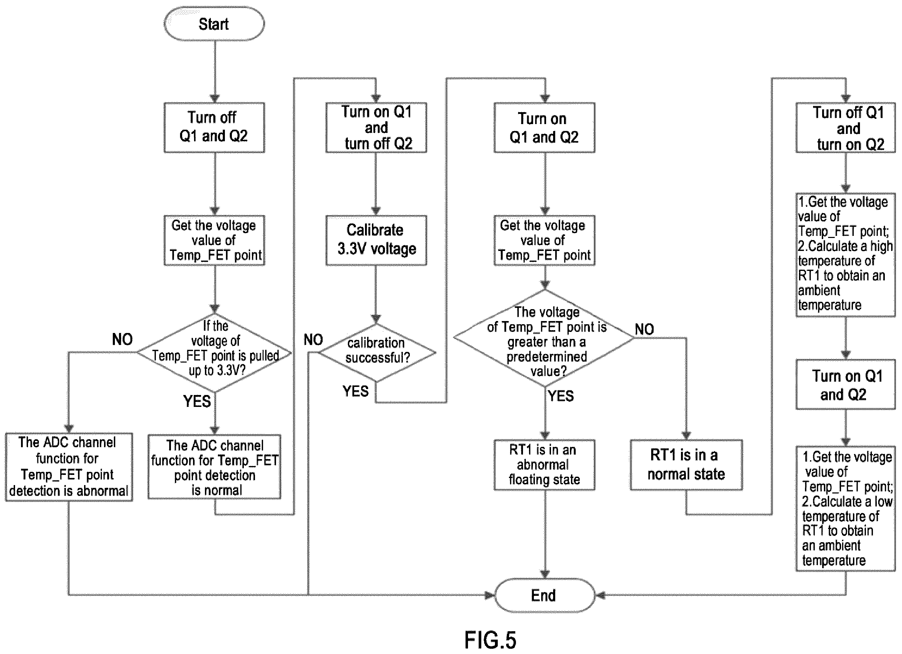

As shown in FIG. 5, an operation process of the circuit of FIG. 4 comprises the following steps.

Step S1: When the circuit starts, turn off Q1 and Q2. At this time, both R2 and RT1 are disconnected. At this time, the voltage value Temp_FET at TP1 is detected. If its voltage value is 3.3V (that is, the voltage of the voltage source V1), this indicates that the MCU works normally, i.e., a function of the ADC channel is normal, and then the process proceeds to step S2; otherwise, this indicates that the function of the ADC channel is abnormal and needs to be repaired. It should be pointed out that step S1 is also used to check the floating of pin P1, that is, the abnormal function of the ADC channel indicates that the pin P1 is in the floating state.

Step S2: turn on Q1, turn off Q2, the voltage value Temp_FET at TP1 is detected, and whether the voltage of the voltage source V1 is 3.3V is calibrated, and if YES, the process proceeds to step S3. The specific calibration process is turning off Q2 to cause RT1 to be disconnected, and turning on Q1 to connect R2 and R1 in series between the voltage source V1 and the ground G1. Since the resistance values of R1 and R2 are equal, the value of the divided voltage Temp_FET at TP1 is half of the voltage source V1, that is, if the value of the divided voltage Temp_FET is 1.65V, this indicates that the voltage of the voltage source V1 is 3.3V, and the calibration is successful.

Step S3: turn on Q1 and Q2. At this time, R2 and RT1 are connected in parallel between the R1 and the ground G1, the voltage value Temp_FET at TP1 is detected, and determination is made as to whether the voltage of the voltage value Temp_FET is greater than a predetermined value. If NO, the process proceeds to Step S4. A purpose of step S3 is to detect whether RT1 is in the floating state. Specifically, the voltage value Temp_FET is actually a value of the divided voltage of the total resistance of RT1 and R2 which are connected in parallel, and the resistance value of RT1 increases as the temperature falls when the RT1 is an NTC resistor. When the temperature detected by RT1 or the temperature at which RT1 lies is within a predetermined temperature range, the resistance value of RT1 has a predetermined upper limit value; however, when the temperature exceeds a certain threshold and becomes lower and lower, the resistance value of RT1 becomes larger and larger and approaches infinity, i.e., the circuit is open. RT1 is in the floating state at this time.

Based on this, the temperature detected by RT1 is set within a predetermined temperature range according to specific applications. When RT1 is at a predetermined temperature threshold, the resistance value of RT1 is a predetermined upper limit value, and the voltage value Temp_FET is the above-mentioned predetermined value. When the temperature detected by RT1 exceeds the predetermined temperature range, the resistance value of RT1 exceeds a predetermined upper limit value, and the voltage value Temp_FET exceeds the predetermined voltage value. Therefore, when it is detected in step S3 that the voltage of the voltage value Temp_FET is greater than the predetermined value, this indicates that the RT1 is in an abnormal floating state, i.e., the temperature exceeds the predetermined range; if the voltage of the voltage value Temp_FET is not greater than the predetermined value, this indicates that the RT1 is in a normal state. Furthermore, when the voltage value Temp_FET is zero volts, this indicates that RT1 is shorted.

Step S4: turn off Q1 and turn on Q2. At this time, R2 is disconnected, RT1 and R1 are electrically connected in series between the voltage source V1 and the ground G1, and the voltage value Temp_FET at TP1 is detected. The voltage value is actually a value of the divided voltage of RT1. The resistance value of RT1 at this time is calculated according to the value of the divided voltage, and an ambient temperature detected by RT1 or ambient temperature at which RT1 lies is calculated by using a resistance-temperature relationship of RT1.

As previously described based on the example in FIG. 2, the upper limit of the voltage value Temp_FET monitored by the MCU is 2.4V. Therefore, if the voltage value Temp_FET detected at this time exceeds 2.4V, this indicates that the resistance value of RT1 increases beyond an upper limit threshold as the temperature decreases. That is to say, the temperature monitored at this time falls beyond a predetermined range and a real temperature at this time cannot be known accurately, and it is necessary to reduce the value of the divided voltage of RT1 and increase a monitoring range of the temperature. At this time, the process needs to proceed to step S5.

Step S5: turn on Q1 and Q2. At this time, R2 and RT1 are connected in parallel between the R1 and the ground G1, the voltage value Temp_FET at TP1 is detected, and a low value of the temperature at which RT1 lies at this time is calculated. In step S5, since the total resistance value is reduced by connecting R2 in parallel with RT1, the value of the divided voltage of the voltage Temp_FET at TP1 is reduced. That is, as compared with the voltage value Temp_FET at a low temperature at this time exceeds 2.4V in step S4, since R2 is added to be connected with RT1 in parallel, the voltage value Temp_FET is reduced from 2.4V, so that the voltage value falls within the detection range of the MCU.

It needs to be appreciated that the above steps S1-S5 are not necessarily performed sequentially or simultaneously in the stated order, and on the contrary, these steps are independent of each other to achieve different functions, so these steps may be performed independently of each other, performed in any order, or performed in any order by combining some of these steps. That is, the MCU may selectively perform one or more of steps S1-S5 according to control logic.

Before the motor 10 runs, the MCU needs to perform a floating check for the pin P1 (e.g., step S1); after the motor runs, the MCU will continue to perform the floating check for it.

Before the motor 10 runs, the MCU needs to calibrate the voltage of the voltage source V1 (e.g., step S2); after the motor runs, the MCU may not calibrate it any longer.

Before the motor 10 runs, the MCU needs to perform the float checking and/or a short-circuiting check for RT1 (e.g., step S3); after the motor 10 runs, the MCU will continue to perform the float checking and/or the short-circuiting check for RT1.

During the running of the motor 10, the MCU needs to monitor the temperature of the power device detected by RT1 and/or the surrounding ambient temperature (for example, steps S4 and/or S5). Usually, the ambient temperature may be detected by step S4, wherein R2 is disconnected, and the ambient temperature is determined only by the value of the divided voltage of RT1. In this case, the temperature range monitored by the MCU is for example 15°C to 125°C. When the ambient temperature is lower than 15°C, the MCU switches to step S5, where R2 and RT1 are connected in parallel, and the ambient temperature is determined by the value of the divided voltage of the total resistance after they are connected in parallel. In this case, the temperature range monitored by the MCU is for example -40 °C (minus 40°C) to 125°C.

In addition, it should be noted that various resistance values, voltage values, capacitance values and temperature values listed herein are all examples, and are intended to illustrate the concept of the present invention and not to limit the present invention. Those skilled in the art may set these values reasonably according to specific applications, and RT1 may be a PTC resistor although RT1 is described by taking the NTC resistor as an example. All of these are applicable to the inventive concept and fall within the protection scope of the present invention.

In addition, the present invention further provides a control system for performing the operation method of the circuit of the present invention, and the control system selectively performs one or more of steps S1-S5 according to control logic.

According to the detection circuit and the operation method thereof according to the present invention, the calibration of the voltage of the voltage source may be realized, the floating check of the circuit pin may be realized, and the floating check and/or short-circuiting check of the temperature sensitive resistor in the circuit may also be realized, and additionally, the temperature monitoring range of the temperature sensitive resistor may be expanded. The detection circuit of the present invention is simple in structure, easy to operate, low in cost, may realize multiple functions, has good versatility, and may be applied to various tools and/or motors, such as power tools and their motors.

Although specific embodiments of the present invention have been described above, those skilled in the art should understand that these are merely illustrative and the scope of the present invention is defined by the appended claims. Those skilled in the art may make various combinations, changes or modifications to these embodiments without departing from the principle and essence of the present invention, but these combinations, changes and modifications all fall within the protection scope of the present invention.

## Claims

1. A detection circuit, comprising:
a voltage source (V1);
a ground (G1);
a first resistor (R1) whose first end is connected to the voltage source (V1);
a thermistor (RT1) whose first end is connected to a second end of the first resistor (R1);
a second resistor (R2) whose first end is connected to a connection point between the thermistor (RT1) and the first resistor (R1);
a first switching element (Q1) connected between a second end of the second resistor (R2) and the ground (G1); and
a second switching element (Q2) connected between a second end of the thermistor (RT1) and the ground (G1).

2. The detection circuit according to claim 1, wherein the first switching element (Q1) and the second switching element (Q2) are transistors.

3. The detection circuit according to claim 1, wherein the thermistor (RT1) is a negative temperature coefficient thermistor.

4. The detection circuit according to claim 1, wherein the detection circuit further comprises a pin (P1) located between the first resistor (R1) and the thermistor (RT1).

5. The detection circuit according to claim 1, wherein the detection circuit further comprises a first capacitor (C1) connected in parallel with the thermistor (RT1) between the first resistor (R1) and the ground (G1).

6. The detection circuit according to claim 1, wherein the detection circuit further comprises a driving circuit for controlling the first switching element (Q1), the driving circuit comprising: a third resistor (R3) and a second capacitor (C2), the third resistor (R3) and the second capacitor (C2) being sequentially connected between a control end of the first switching element (Q1) and the ground (G1); and a fourth resistor (R4) being connected in parallel with the third resistor (R3) and the second capacitor (C2) between the control end of the first switching element (Q1) and the ground (G1).

7. The detection circuit according to claim 1, wherein the detection circuit further comprises a driving circuit for controlling the second switching element (Q2), the driving circuit comprising: a fifth resistor (R5) connected between a control end of the second switching element (Q2) and a controller of the detection circuit; and a sixth resistor (R6) connected between the control end the second switching element (Q2) and the ground (G1).

8. A method of operating the detection circuit according to any of claims 1-7, the method comprising a step of turning off the first switching element (Q1) and the second switching element (Q2) to detect a voltage value at the connection point between the thermistor (RT1) and the first resistor (R1).

9. The method according to claim 8, wherein the method further comprises a step of turning on the first switching element (Q1) and turning off the second switching element (Q2) to detect the voltage value at the connection point between the thermistor (RT1) and the first resistor (R1).

10. The method according to claim 8, wherein the method further comprises a step of turning on the first switching element (Q1) and the second switching element (Q2) to detect the voltage value at the connection point between the thermistor (RT1) and the first resistor (R1).

11. The method according to claim 8, wherein the method further comprises a step of turning off the first switching element (Q1) and turning on the second switching element (Q2) to detect the voltage value at the connection point between the thermistor (RT1) and the first resistor (R1).

12. The method according to claim 11, wherein the method further comprises in the step of turning off the first switching element (Q1) and turning on the second switching element (Q2), a step of turning on the first switching element (Q1) to detect the voltage value at the connection point between the thermistor (RT1) and the first resistor (R1) when the voltage value at the connection point between the thermistor (RT1) and the first resistor (R1) exceeds a predetermined value.

13. The method according to any of claims 8-12, wherein the method further comprises selectively performing one or more of the steps according to control logic.

14. A control system for performing the method according to any of claims 8-13, wherein the control system selectively performs one or more of the steps according to control logic.
